# EUROPÄISCHE PATENTSCHRIFT

(11) **EP 3 794 716 B1**
(45) Veröffentlichungstag und Bekanntmachung des Hinweises auf die Patenterteilung: **08.12.2021**
(21) Anmeldenummer: 19756351.3
(22) Anmeldetag: 19.08.2019
(51) Int. Cl.: H02K 5/24, H02K 9/22

(54) **ABSCHIRMELEMENT**
SHIELDING ELEMENT
ÉLÉMENT DE PROTECTION

(30) Priorität: 21.08.2018 DE 102018120379
(43) Veröffentlichungstag der Anmeldung: 24.03.2021
(73) Patentinhaber: Carcoustics TechConsult GmbH, 51381 Leverkusen (DE)
(72) Erfinder: KOFFERATH, Christoph, 41812 Erkelenz (DE); LAMMERT, Thomas, 51491 Overath (DE); HORAND, Friederike, 50733 Köln (DE); SCHÖNZART, Paul, 51381 Leverkusen (DE)
(74) Vertreter: Patentanwälte Bauer Vorberg Kayser
(86) Internationale Anmeldenummer: PCT/EP2019/072100
(87) Internationale Veröffentlichungsnummer: WO 2020/038866

(56) Entgegenhaltungen:
- EP-A1- 3 138 688
- CN-U- 206 379 839
- CN-U- 206 559 180
- DE-A1- 19 510 287
- JP-A- S61 277 341

## Beschreibung

Die vorliegende Anmeldung betrifft eine akustisch-thermisch wirksame Kapsel für einen Elektromotor eines Kraftfahrzeugs, insbesondere eines Elektrofahrzeugs. Mit der erfindungsgemäßen akustisch-thermisch wirksamen Kapsel lassen sich die Geräuschemissionen von aus dem Stand der Technik bekannten Elektromotoren erheblich reduzieren, wobei gleichzeitig die Bildung von Kondensat wirkungsvoll gemindert und so eine Ansammlung von sich auf dem Elektromotor bildenden Kondensat vermieden wird.

Als Elektrofahrzeuge werden im Sinne der vorliegenden Anmeldung sowohl rein elektrisch angetriebene Kraftfahrzeuge als auch sog. Hybridvarianten, d.h. Kraftfahrzeuge enthaltend einen Verbrennungs- sowie zumindest einen Elektroantriebsmotor, verstanden.

Obwohl die aus dem Stand der Technik bekannten Elektromotoren im Vergleich zu Verbrennungsmotoren bereits um ein Vielfaches leiser sind, besteht weiterhin der Wunsch nach einer weiteren Reduzierung der Geräuschemissionen, insbesondere im Innenraum des Fahrzeugs. So wird in der WO 99/33156 beispielsweise vorgeschlagen, die einzelnen Baugruppen eines Elektromotors, insbesondere den Stator und den Rotor aus Verbundwerkstoffen herzustellen. Hierzu werden die einzelnen Elektrobleche durch Verbundwerkstoffe, bestehend aus zwei miteinander, mittels einer polymeren Schicht, verbundenen dünneren Elektroblechen, ersetzt. Als polymere Schicht werden viskoelastische Kunststoffe, wie Elastomere, verwendet.

Solche Elektromotoren zeigen zwar die gewünschte Reduzierung der Geräuschemissionen auf. In der Praxis zeigt sich jedoch, dass solche Systeme sehr empfindlich auf den Kontakt mit Ölen reagieren, der zum Auflösen der Verbundsysteme führen kann.

Aus JP S61 277341 A ist eine Vorrichtung aus komprimierten Aluminium-Fasern zur Umgebung eines Motors und zur Dämpfung dessen Vibrationen und Geräusche bekannt. Um den Umfang des Motors soll ein weiterer metallischer Körper angeordnet sein, welcher Kühlrippen aufweist und zur Ableitung von Wärme dient.

Aus EP 3 138 688 A1 ist eine Kapselung für eine Einbauvorrichtung bekannt, insbesondere für eine Wärmepumpe.

Aus JP S57 82398 U ist ein schalldichter Körper bekannt, welcher um einen Motor herum angeordnet werden und zur Geräuschdämpfung dienen soll. Bei dem Material des schalldichten Körpers kann es sich um Polyurethanschaum handeln.

Aus US 2013/273309 A1 ist ein Verbundwerkstoff mit einer polymeren Oberflächenschicht bekannt, die über mindestens eine Klebstoffschicht mit einem Substrat verbunden ist. Das Substrat besteht zumindest teilweise aus einem offenporigen Polyurethanschaum. Das Material ist für die Verkleidung des Innenraums eines Fahrzeuges vorgesehen.

Der Erfindung liegt daher die Aufgabe zu Grunde eine gegenüber dem Stand der Technik verbesserte Maßnahme bereitzustellen, die nicht nur eine Reduzierung der Geräuschemission von aus dem Stand der Technik bekannten Elektromotoren erlaubt, sondern gleichzeitig die Bildung von Kondensat mindern kann.

Gelöst wird diese Aufgabe durch eine Vorrichtung mit den Merkmalen des Patentanspruchs 1.

Vorteilhafte Ausgestaltungen und Varianten der Erfindung ergeben sich aus den abhängigen Ansprüchen und der nachfolgenden Beschreibung. So können die in den Ansprüchen einzeln aufgeführten Merkmale in beliebiger, technisch sinnvoller Weise miteinander als auch mit den in der nachfolgenden Beschreibung näher erläuterten Merkmalen kombiniert werden und andere vorteilhafte Ausführungsvarianten der Erfindung darstellen.

Die erfindungsgemäße akustisch-thermisch wirksame Kapsel mit einem Innenraum zur Aufnahme eines Elektromotors weist mehrere miteinander verbindbare akustisch-thermisch wirksame Kapselelemente sowie mindestens ein Befestigungselement zur Befestigung der Kapsel an einem Gehäuse des Elektromotors auf. Die Kapselelemente umfassen eine oder mehrere Schichten aus einem weichelastischen offenporigen Polyurethanschaum, um eine Diffusion von Wasserdampf durch die Kapselelemente zu ermöglichen. Ferner weisen die Kapselelemente innenseitig angeordnete Versteifungselemente auf, um Verformungen aufgrund des Eigengewichtes zu reduzieren und Kondensat abzuleiten.

Unter akustischer Wirksamkeit ist eine Reduktion von Geräuschemissionen bzw. eine akustische Dämmung zu verstehen. Unter einer thermischen Wirksamkeit ist zu verstehen, dass ein ausreichender Luftaustausch zwischen jenem Innenraum zwischen Kapsel und Elektromotor und der Umgebung außerhalb der Kapsel bzw. eine ausreichende Konvektion gewährleistet ist, insbesondere um eine Kondensation von Feuchtigkeit in dem genannten Innenraum oder an dem Elektromotor zu vermeiden.

Durch die den Elektromotor umgebende Kapsel werden die vom Elektromotor erzeugten Geräusche in hohem Maße absorbiert und ein nahezu Geräuschemissionsloser Betrieb des Elektromotors gewährleistet. Dies wirkt sich insbesondere im Innenraum des Fahrzeugs vorteilhaft aus. Weiterhin wird der Elektromotor durch die ihn umgebende Kapsel aufgrund der thermischen Wirksamkeit thermisch von der Umgebung isoliert.

Dadurch, dass die einzelnen Kapselelemente miteinander verbindbar sind, wird zudem eine einfache, kostengünstige und nachrüstbare Möglichkeit zur Reduzierung der Geräuschemissionen, insbesondere im Innenraum des Fahrzeugs, geschaffen.

Um die Kapselelemente miteinander zu verbinden, können unterschiedlichste Befestigungsmethoden verwendet werden, sei es basierend auf mechanischen Befestigungsmitteln, in die Kapselelemente integrierte Befestigungsmittel oder durch Klebemittel. Insbesondere können die Kapselelemente verbunden werden, indem diese gesteckt und/oder geklebt werden. Eine steckbare Verbindungsart erlaubt eine servicefreundliche Montage und Demontage der erfindungsgemäßen Kapsel, ohne das zusätzliche Werkzeuge benötigt werden. Zusätzlich oder alternativ können die Kapselelemente über Klettbänder, Zugbänder, Riemen, Magnetvorrichtungen oder Laschen miteinander verbunden werden, insbesondere also über mechanische Befestigungsvorrichtungen. Nochmals sei betont, dass die genannten Mittel unmittelbar in die Kapselelemente integriert sein können (beispielsweise durch Umschäumen oder Anschäumen) oder in Form von externen Befestigungsmitteln verwendet werden können. In diesem Zusammenhang sei erwähnt, dass die Kapselelemente derart miteinander verbunden werden können, dass die Kapselelemente in den Verbindungsbereichen zumindest teilweise überlappen oder zumindest teilweise beabstandet zueinander angeordnet sind. Die Verbindung der Kapselelemente kann an die akustischen Erfordernisse bzw. an die Erfordernisse zur Gewährleistung einer geringen Kondensatbildung bzw. eines optimierten Kondensatablaufs angepasst sein.

Erfindungsgemäß umfassen die Kapselelemente eine oder mehrere Schichten aus einem weichelastischen offenporigen Polyurethanschaum. Durch die offenporige Struktur wird gewährleistet, dass eine Diffusion von Wasserdampf durch die Kapselelemente bzw. die Kapsel stattfinden kann. So kann beispielsweise die in dem von der Kapsel umschlossenen Raum vorhandene Feuchtigkeit bei Zunahme der Temperatur durch den Betrieb des Elektromotors entweichen, so dass die Raumluft getrocknet wird. Sollte es im weiteren Betrieb zu einem Temperaturabfall kommen, so kann sich nahezu kein Kondensat niederschlagen. Durch eine solche Ausgestaltung wird eine ungewünschte Beschädigung des Elektromotors im Sinne einer Korrosion bzw. Feuchtigkeits-basierten Verwitterung vermieden. Gleichzeitig wird durch den erfindungsgemäßen Aufbau der Kapselelemente aus einer oder mehreren Schichten eines weichelastischen offenporigen Polyurethanschaums eine hinreichende akustische Wirksamkeit bereitgestellt. Die Dichte des Polyurethanschaums liegt typischerweise im Bereich von 60 bis 130 kg/m³.

Je nach Anwendungsfall können auch Polyurethanschäume mit höheren Dichten zur Anwendung kommen. Soll das Kapselelement in erster Linie schalldämmende Eigenschaften aufweisen, so hat sich ein Polyurethanschaum mit einer Dichte von mindestens 250 kg/m³ als besonders vorteilhaft erwiesen. Aber auch bei einer solchen Ausgestaltung kann eine ausreichende Ableitung von gebildetem Kondensat bzw. eine ausreichende Ableitung eines ebensolchen Kondensats gewährleistet sein, insbesondere durch die weiteren im Rahmen der hiesigen Erfindungsbeschreibung genannten Ausgestaltungen.

Die erfindungsgemäße Kapsel besteht vorzugsweise aus 2 bis 6, mehr bevorzugt aus 4 bis 6 einzelner miteinander verbindbarer akustisch-thermisch wirksamer Kapselelemente.

Weiterhin wird die erfindungsgemäße Kapsel mit einem definierten Abstand um den Elektromotor angeordnet, so dass eine ausreichende Konvektion der Luft gewährleistet wird. Um eine ggf. auftretende Kapillarwirkung zu verhindern, derart, dass Kondenswasser vom Schaumkörper aufgenommen wird, hat sich ein Abstand von mindestens 1500 µm als besonders vorteilhaft erwiesen. Auch kann ein definierter Abstand der Kapsel zu einer Verringerung der Kondensatbildung als solcher führen, denn durch die bei einem gewissen Abstand der Kapsel vom Elektromotor gewährleistete Luftkonvektion, kann die sich bildende Feuchtigkeit unmittelbar nach Kondensatbildung eine auf der Luftkonvektion basierende Trocknung erfahren. Weiterhin kann der Abstand zwischen Kapsel und Elektromotor hinsichtlich einer akustischen Frequenzoptimierung auf die konkret vorliegenden Anforderungen angepasst werden. Je nach Größe oder Leistung des Motors können unterschiedliche Abstände zur Erzielung der gleichen akustischen Performance erforderlich sein. Der Abstand kann also auf das Frequenzspektrum des Motors abgestimmt werden.

Besonders bevorzugt weist der Abstand 3 bis 12 mm, mehr bevorzugt 6 bis 9 mm, und am meisten bevorzugt 7 bis 8 mm auf. Auch kleinere Abstände als die angegebenen 3 mm können grundsätzlich bestimmte akustische oder thermische Vorteile mit sich bringen.

Die ein oder mehreren Schichten weisen vorzugsweise eine Schichtdicke im Bereich von 5 bis 30 mm auf.

Erfindungsgemäß weisen die Kapselelemente Versteifungselemente auf, um Verformungen aufgrund des Eigengewichts zu reduzieren.

Die Versteifungselemente können in Form von innen- und/oder außenseitig angeordneten Rippen oder Rinnen, aus innerhalb der Kapselelemente angeordneten Einlegern und/oder aus Strukturen mit einer höheren Komprimierung gebildet werden. Innenseitig angeordnete Versteifungselemente sind dabei zur Kondensatableitung vorgesehen, wodurch ein gezielter Ablauf von sich bildendem Kondensat ermöglicht wird.

Vorzugsweise bestehen die Einleger aus einer biegeelastischen Schwerschicht, wobei die Schwerschicht besonders bevorzugt ausgewählt ist aus Ethylenvinylacetat (EVA), Ethylen-Propylen-Kautschuk (EPM), Ethylen-Propoylen-Dien-Kautschuk (EPDM) und/oder Polyvinylchlorid (PVC) und/oder Mischungen hiervon.

Grundsätzlich sei bemerkt, dass Verstärkungselemente (sei es in form von Rippen, Rinnen, Einlegern oder anderweitigen Strukturen) aus den unterschiedlichsten Materialien gebildet sein können. Die Verstärkungselemente können in das Kapselmaterial (z.B. den Polyurethanschaum) integriert bzw. angeformt sein (z.B. im Wege einer Umschäumung oder Anschäumung) oder an dem Kapselmaterial befestigt (z.B. mit diesem verklebt) sein. Auch kann es sich dabei um spritzgegossene Polymere oder spritzgegossene Schwerschichten (Spritzgusseinleger) handeln. Im Spritzguss lassen sich für die jeweilige Anwendung maßgeschneiderte Versteifungselemente mit unterschiedlichen Versteifungsrichtungen erzeugen. Als beispielhaftes Material sei spritzgegossenes Polyamid genannt.

Getreu einer besonders vorteilhaften Ausgestaltung der Erfindung können die Versteifungselemente in Form eines Exo-Skeletts gebildet sein, beispielsweise in Form eines spritzgegossenen Exo-Skeletts, welches entweder in die Kapselelemente integriert ist oder dieses im Sinne einer Gerüststruktur von außen oder innen umgibt. Ein solches Exo-Skelett kann zur Gesamtsteifigkeit der sich aus den Kapselelementen zusammensetzenden Kapsel beitragen, gleichsam aber auch eine gewisse Elastizität erlauben. Ferner können Teile des Exo-Skeletts als Ankerstellen zur Befestigung der Kapsel an dem Elektromotor dienen. Die Form des Exo-Skeletts kann an die akustischen und thermischen Erfordernisse der Kapsel angepasst werden. Ein solches Exo-Skelett kann einteilig oder mehrteilig im Spritzguss gefertigt und in einem separaten Schritt von dem Material der Kapselelemente umschäumt oder angeschäumt werden. Dabei können form- und/oder stoffschlüssige Verbindungen zwischen Exo-Skelett und Kapselelementen bereitgestellt werden.

Eine bevorzugte Schichtdicke einer Schwerschicht beträgt 1 bis 5 mm.

Strukturen mit einer höheren Komprimierung zeichnen sich dadurch aus, dass sie örtlich eine kleinere Dicke aufweisen, als andere sie umgebende Stellen des Kapselelements. Die Strukturen können vorzugsweise durch einzelne oder mehrere parallel zueinander angeordnete Liniensegmente gebildet werden, die das Kapselelement versteifen.

In einer besonders bevorzugten Ausführungsvariante weist mindestens eines der Kapselelemente eine semipermeable Membran auf, die den Feuchtigkeitsaustausch zwischen der von der Kapsel umgebenden Raumluft und Umgebungsluft verbessert. Als Materialien zur Herstellung der Membran werden vorzugsweise Mikroperforierte Folien oder Inmould Coatings eingesetzt. Auch Materialien aus der Textilindustrie, wie beispielsweise Gore-Tex^{™}, sind hierzu geeignet. Auch durch die Implementierung einer semipermeablen Membran wird die Korrosion bzw. Verwitterung des Elektromotors durch effektive Kondensatableitung verringert.

Die semipermeable Membran ist dabei derart ausgestaltet, dass Feuchtigkeit aus dem von der Kapsel umschlossenen Raum hinaus diffundieren, die Feuchtigkeit aus der Umgebungsluft jedoch nicht in den von der Kapsel umschlossenen Raum hinein diffundieren kann.

Zur Erhöhung der Schallisolierung weist vorzugsweise mindestens eines der Kapselelemente, mehr bevorzugt 2 bis 4 der Kapselelemente, auf der Innenoberfläche musterartig angeordnete Höhenstrukturen auf, die vorzugsweise pyramidenförmig ausgebildet sind.

Gemäß einer besonders bevorzugten Ausgestaltung sind die dem Elektromotor zugewandten Bereiche der Höhenstrukturen, beispielsweise die Spitzen der pyramidenförmigen Körper, abgeflacht, so dass sie Auflagenflächen bilden. Weiterhin bevorzugt können die Auflageflächen mit einem wasserabweisenden Mittel versehen werden, welches beispielsweise aus einem hydrophoben Kunststoff besteht. Hierdurch weisen derart ausgestaltete Höhenstrukturen - neben der verbesserten Schalldämmung - die Funktion eines Abstandhalters und eines Befestigungselements zugleich auf.

Zu besseren Fixierung derart ausgestalteter Kapselelemente an dem Elektromotor können die Auflagenflächen vorzugsweise mit einem Klebstoff versehen werden.

In einer weiteren bevorzugten Ausgestaltung werden die Befestigungselemente durch pinförmige Elemente gebildet. Als besonders vorteilhaft hat sich gezeigt, wenn pinförmige Elemente aus einem geschäumten Kunststoff, beispielsweise PUR, verwendet werden, da derart ausgestaltete Befestigungselemente schwingungsentkoppelnd sind.

Als geeignetes Material für die Befestigungselemente können auch andere aus dem Stand der Technik bekannte elastomere Kunststoffe verwendet werden. Vorzugsweise sind diese ausgewählt aus der Reihe der viskoelastischen Schaumstoffe. Ein kommerziell erhältlicher elastomerer Kunststoff wird beispielsweise von der Firma BASF unter dem Produktnamen Cellasto^{®} vertrieben.

Gemäß einer weiteren vorteilhaften Ausgestaltung der erfindungsgemäßen Kapsel weist mindestens eines der Kapselelemente eine Öffnung auf, vorzugsweise das den Boden der Kapsel bildende Kapselelement. Die Öffnung kann beispielsweise trichterförmig ausgebildet sein, so dass sie einen Auslauf bildet und somit größere Wasseransammlungen, die sich im Bodenbereich der erfindungsgemäßen Kapsel konzentrieren durch die Öffnung abfließen können. Auch dies trägt zu einer Korrosionsvermeidung des eingehüllten Elektromotors bei.

In einer weiteren vorteilhaften Ausgestaltung kann mindestens eines der Kapselelemente, vorzugsweise das die Wand der Kapsel bildende Kapselelement eine oder mehr bevorzugt mehrere spaltförmige Öffnungen aufweisen, die eine Hinterlüftung der erfindungsgemäßen Kapsel gewährleisten.

Ferner weist die erfindungsgemäße Kapsel bzw. mindestens eines der Kapselelemente eine Ausnehmung für eine Antriebswelle und/oder einen Kabelbaum auf.

Gemäß einem weiteren Aspekt betrifft die vorliegende Erfindung die Verwendung der erfindungsgemäßen Kapsel zur akustisch-thermischen Isolierung eines Elektromotors für ein Kraftfahrzeug, insbesondere ein Elektrofahrzeug.

Nachfolgend wird die vorliegende Erfindung anhand einer schematischen Darstellung näher erläutert.

### Kurze Beschreibung der Zeichnungen

Fig. 1 zeigt eine schematische Schnittdarstellung einer Ausführungsvariante der erfindungsgemäßen akustisch-wirksamen Kapsel, und
Fig. 2 zeigt eine schematische perspektivische Darstellung einer Ausführungsvariante eines Kapselelements.

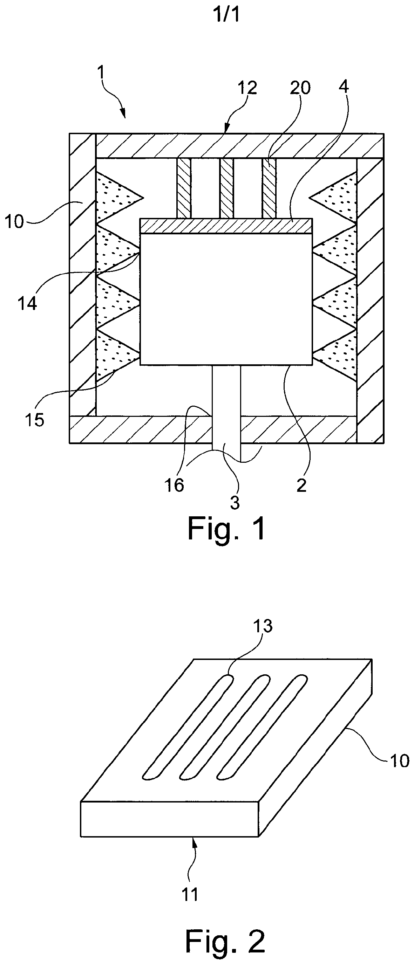

Figur 1 zeigt eine stark vereinfachte Querschnittsdarstellung einer Ausführungsvariante der erfindungsgemäßen akustisch-wirksamen Kapsel 1, die um einen Elektromotor 2 eines Elektrofahrzeugs (nicht dargestellt) angeordnet ist. Der Elektromotor 2 weist, neben weiteren vorliegend nicht im Detail gezeigten Komponenten, eine Antriebswelle 3 sowie eine Grundplatte 4 auf.

In der vorliegenden Ausführungsvariante weist die Kapsel 1 eine quaderförmige Form auf und besteht aus 6 einzelnen miteinander verbundenen akustisch-wirksamen Kapselelementen 10. Die Kapselelemente 10 sind beispielsweise durch nicht dargestellte Pins und Pinaufnahmen miteinander verbunden. Um eine Verbindung der einzelnen Kapselelemente 10 herzustellen, werden diese ineinandergesteckt und um den Elektromotor 2 positioniert.

Die Kapsel 1 weist weiterhin Befestigungselemente 20 auf, die ebenfalls in Form von Pins ausgebildet sind. Diese sind integral mit dem oberen, den Deckel bildenden, Kapselelement 10 verbunden und erstrecken sich von einer Innenoberfläche 11 des Kapselelements 1 zu der Grundplatte 4 des Elektromotors 2. Dabei bilden sie einen Abstand zwischen den beiden Komponenten von ca. 6 mm aus. Um eine bessere Fixierung zu erhalten, können die Befestigungselemente 20 mit der Grundplatte 4 verklebt werden.

Die seitlichen Kapselelemente 10 weisen in der vorliegenden Ausführungsvariante pyramidenförmige Höhenstrukturen 15 aus, die eine zusätzlich schallisolierende Wirkung haben. Wie in der Fig. 1 dargestellt, bilden die hier gezeigten Höhenstrukturen 15 zudem Befestigungselemente 20 aus, die die gesamte Kapsel 1 an dem Elektromotor 2 seitlich fixieren. Hierzu weisen die Befestigungselemente 15 an ihrer Spitze Auflageflächen 14 auf, die an dem Elektromotor 2 anliegen.

An dem in Fig. 1 dargestellten unteren Kapselelement 10 ist eine Ausnehmung 16 vorgesehen, die die Antriebswelle 3 des Elektromotors 2 umfasst.

Fig. 2 zeigt eine stark vereinfachte perspektivische Darstellung einer Ausführungsvariante eines Kapselelements 10 mit Versteifungselementen 13 auf. Die Versteifungselemente 13 sind in der vorliegenden Ausführungsvariante in Form von parallel zueinander angeordneter Rillen ausgebildet und sind auf einer Außenoberfläche 12 des Kapselelements 10 angeordnet.

### Bezugszeichenliste

- 1: Akustisch-wirksame Kapsel
- 2: Elektromotor
- 3: Antriebswelle
- 4: Grundplatte
- 10: Kapselelemente
- 11: Innenoberfläche
- 12: Außenoberfläche
- 13: Versteifungselement
- 14: Auflagefläche
- 15: Höhenstrukturen
- 16: Ausnehmung
- 20: Befestigungselement

## Patentansprüche

1. Akustisch-thermisch wirksame Kapsel (1) mit einem Innenraum zur Aufnahme eines Elektromotor (2) eines Kraftfahrzeugs, insbesondere eines Elektrofahrzeugs, wobei die Kapsel (1) eine Reduktion von Geräuschemissionen bzw. eine akustische Dämmung ermöglicht und einen Luftaustausch zwischen dem Innenraum zwischen Kapsel (1) und Elektromotor (2) und der Umgebung außerhalb der Kapsel (1) gewährleistet, wobei die Kapsel (1) aufweist:
- mehrere miteinander verbindbare akustisch-thermisch wirksame Kapselelemente (10), und
- mindestens ein Befestigungselement (20) zur Befestigung der Kapsel (1) an einem Gehäuse des Elektromotors (2),
- wobei die Kapselelemente (10) eine oder mehrere Schichten aus einem weichelastischen offenporigen Polyurethanschaum umfassen, um eine Diffusion von Wasserdampf durch die Kapselelemente (10) zu ermöglichen,
- wobei die Kapselelemente (10) innenseitig angeordnete Versteifungselemente (13) aufweisen, um Verformungen aufgrund des Eigengewichtes zu reduzieren und Kondensat abzuleiten.

2. Kapsel (1) nach Anspruch 1, wobei die eine oder mehreren Schichten eine Schichtdicke im Bereich von 5 bis 30 mm aufweisen.

3. Kapsel (1) nach einem der vorhergehenden Ansprüche 1 bis 2, wobei die Versteifungselemente ausgebildet sind in Form eines Exo-Skeletts, insbesondere in Form eines spritzgegossenen Exo-Skeletts.

4. Kapsel (1) nach einem der vorhergehenden Ansprüche 1 bis 3, wobei mindestens eines der Kapselelemente (10) eine semipermeable Membran aufweist.

5. Kapsel (1) nach einem der vorhergehenden Ansprüche 1 bis 4, wobei mindestens eines der Kapselelemente (10) auf einer Innenoberfläche (11) musterartig angeordnete Höhenstrukturen (15) aufweist.

6. Kapsel (1) nach einem der vorhergehenden Ansprüche 1 bis 5, wobei mindestens eines der Kapselelemente (10) eine Ausnehmung (16) aufweist.

7. Kapsel (1) nach einem der vorhergehenden Ansprüche 1 bis 6, wobei mindestens eines der Kapselelemente (10) eine biegeelastische Schwerschicht aufweist.

8. Kapsel (1) nach einem der vorhergehenden Ansprüche 1 bis 7, wobei das Befestigungselement (20) schwingungsentkoppelnd ist.

9. Verwendung einer Kapsel (1) nach einem der vorhergehenden Ansprüche 1 bis 8 zur akustisch-thermischen Isolierung eines Elektromotors (2) für ein Kraftfahrzeug, insbesondere ein Elektrofahrzeug.

## Claims

1. An acoustically and thermally effective capsule (1) with an interior space for accommodating an electric motor (2) of a motor vehicle, particularly of an electric vehicle, wherein the capsule (1) enables a reduction of noise emissions or acoustic damping and ensures an exchange of air between the interior space between the capsule (1) and the electric motor (2) and the environment outside the capsule (1), the capsule (1) comprising:
- several acoustically and thermally effective capsule elements (10) that can be connected to one another, and
- at least one fastening member (20) for fastening the capsule (1) to a housing of the electric motor (2),
- wherein the capsule elements (10) comprise one or several layers consisting of a flexible, open-pore polyurethane foam to permit a diffusion of water vapor through the capsule elements (10),
- wherein the capsule elements (10) have stiffening members (13) disposed on the inside in order to reduce deformations due to its own weight and to drain condensate.

2. The capsule (1) according to claim 1, wherein the one or several layers have a layer thickness in the range of 5 to 30 mm.

3. The capsule (1) according to any one of the preceding claims 1 to 2, wherein the stiffening members are configured in the form of an exoskeleton, in particular in the form of an injection-molded exoskeleton.

4. The capsule (1) according to any one of the preceding claims 1 to 3, wherein at least one of the capsule elements (10) has a semipermeable membrane.

5. The capsule (1) according to any one of the preceding claims 1 to 4, wherein at least one of the capsule elements (10) has elevated structures (15) disposed in a pattern-like manner on an inner surface (11).

6. The capsule (1) according to any one of the preceding claims 1 to 5, wherein at least one of the capsule elements (10) has a cut-out (16).

7. The capsule (1) according to any one of the preceding claims 1 to 6, wherein at least one of the capsule elements (10) has a flexurally elastic heavy layer.

8. The capsule (1) according to any one of the preceding claims 1 to 7, wherein the fastening member (20) is vibration-decoupling.

9. Use of a capsule (1) according to any one of the preceding claims 1 to 8 for the acoustic and thermal insulation of an electric motor (2) for a motor vehicle, in particular an electric vehicle.

## Revendications

1. Capsule (1) à effet acoustique et thermique comprenant un intérieur pour loger un moteur électrique (2) d'un véhicule automobile, en particulier d'un véhicule électrique, dans laquelle la capsule (1) permet une réduction d'émissions sonores ou bien une isolation acoustique et assure un échange d'air entre l'intérieur existant entre la capsule (1) et le moteur électrique (2) et l'environnement hors de la capsule (1), ladite capsule (1) présentant:
- une pluralité d'éléments de capsule (10) à effet acoustique et thermique qui peuvent être reliés entre eux, et
- au moins un élément de fixation (20) pour fixer la capsule (1) à un boîtier du moteur électrique (2),
- dans lequel les éléments de capsule (10) comprennent une ou plusieurs couches d'une mousse de polyuréthane souple à pores ouverts afin de permettre une diffusion de vapeur d'eau à travers les éléments de capsule (10),
- dans laquelle les éléments de capsule (10) comprennent des éléments de rigidification (13) disposés intérieurement afin de réduire des déformations dues au propre poids et d'évacuer du condensat.

2. Capsule (1) selon la revendication 1, dans laquelle ladite une ou lesdites plusieurs couches présentent une épaisseur de couche comprise entre 5 et 30 mm.

3. Capsule (1) selon l'une quelconque des revendications précédentes 1 à 2, dans laquelle les éléments de rigidification sont conçus sous la forme d'un exo-squelette, en particulier sous la forme d'un exo-squelette moulé par injection.

4. Capsule (1) selon l'une quelconque des revendications précédentes 1 à 3, dans laquelle au moins l'un des éléments de capsule (10) présente une membrane semi-perméable.

5. Capsule (1) selon l'une quelconque des revendications précédentes 1 à 4, dans laquelle au moins l'un des éléments de capsule (10) présente des structures en hauteur (15) disposées de type motif sur une surface intérieure (11).

6. Capsule (1) selon l'une quelconque des revendications précédentes 1 à 5, dans laquelle au moins l'un des éléments de capsule (10) présente un évidement (16).

7. Capsule (1) selon l'une quelconque des revendications précédentes 1 à 6, dans laquelle au moins l'un des éléments de capsule (10) présente une couche lourde élastique en flexion.

8. Capsule (1) selon l'une quelconque des revendications précédentes 1 à 7, dans laquelle ledit élément de fixation (20) est à découplage vibratoire.

9. Utilisation d'une capsule (1) selon l'une quelconque des revendications précédentes 1 à 8, pour l'isolation acoustique et thermique d'un moteur électrique (2) pour un véhicule automobile, en particulier un véhicule électrique.
